# EUROPÄISCHE PATENTSCHRIFT

(11) **EP 3 077 321 B1**
(45) Veröffentlichungstag und Bekanntmachung des Hinweises auf die Patenterteilung: **22.09.2021**
(21) Anmeldenummer: 14800015.1
(22) Anmeldetag: 14.11.2014
(51) Int. Cl.: B66B 23/00

(54) **AUFLAGER ZUR BAUSEITIGEN LAGERUNG EINER PERSONENTRANSPORTEINRICHTUNG**
SUPPORT FOR SUPPORTING A PASSENGER TRANSPORTATION DEVICE
APPUI POUR LE LOGEMENT CÔTÉ CONSTRUCTION D'UN DISPOSITIF DE TRANSPORT DE PERSONNES

(30) Priorität: 06.12.2013 EP 13196071
(43) Veröffentlichungstag der Anmeldung: 12.10.2016
(73) Patentinhaber: Inventio AG, 6052 Hergiswil (CH)
(72) Erfinder: KRAMPL, David, A-1100 Wien (AT); WINKLER, Gerald, A-7100 Neusiedl am See (AT); HORVATH, Günter, A-1220 Wien (AT); NIEDERMAYER, Günther, A-1130 Wien (AT); MATHEISL, Michael, A-2331 Vösendorf (AT)
(86) Internationale Anmeldenummer: PCT/EP2014/074637
(87) Internationale Veröffentlichungsnummer: WO 2015/082195

(56) Entgegenhaltungen:
- EP-B1- 0 963 941
- JP-A- H10 316 351
- JP-A- 2000 095 471
- JP-A- 2000 120 301
- JP-B1- 2 886 527
- JP-U- S5 352 591
- JP-U- S5 875 273
- US-B1- 6 637 580

## Beschreibung

Die Erfindung betrifft ein Auflager zur bauseitigen Lagerung der beiden Enden einer Personentransporteinrichtung, insbesondere einer Fahrtreppe oder eines Fahrsteiges.

Üblicherweise werden Fahrtreppen beziehungsweise Fahrsteige an ihren beiden Enden auf elastischen Auflagerelementen gelagert, die je aus einer Stahlplatte und einer elastischen Zwischenlage bestehen. Nachteilig bei diesem Auflager ist, dass bei übermäßigen Bewegungen Querkräfte entstehen können, bei deren Einwirkung ein Tragwerk beziehungsweise ein Fachwerk der Personentransporteinrichtung deformiert werden kann.

Diese übermäßigen Bewegungen entstehen beispielsweise durch auf ein Bauwerk einwirkende Schwingungen und Stöße von Erdbeben. Die Querkräfte entstehen infolge der Massenträgheit der Personentransporteinrichtung selbst und durch die Bewegungen von Etagen des Bauwerks, die sich in horizontaler Richtung relativ zueinander bewegen. Eine Personentransporteinrichtung die zwei Etagen verbindet, kann durch die horizontalen Bewegungen der Etagen aus den Auflagern springen oder es können Beschädigungen am Bauwerk und/oder an der Fahrtreppe beziehungsweise am Fahrsteig auftreten.

Um solche Beschädigungen zu verhindern, schlägt die EP 0 963 941 B1 ein Auflager zur bauseitigen Lagerung der beiden Enden einer Personentransporteinrichtung vor. Das Auflager weist eine am ersten Ende der Personentransporteinrichtung vorgesehene Schwenklagerstelle auf, deren Schwenkachse bezüglich ihrer Einbaulage vertikal angeordnet ist. Ferner weist das Auflager eine am zweiten Ende der Personentransporteinrichtung vorgesehene Loslagerstelle auf, die zur Aufnahme orthogonal zur Schwenkachse auftretender, horizontaler Bewegungen ausgebildet ist. Seitlich der Loslagerstelle sind Federelemente angeordnet, welche die Personentransporteinrichtung nach einer seitlichen Bewegung wieder zentrieren.

Die in der EP 0 963 941 B1 vorgeschlagene Lösung ermöglicht eine Verhinderung von Schäden, sofern eine konstruktionsabhängige zulässige Geschwindigkeit beziehungsweise Frequenz der seitlichen Bewegungen nicht überschritten wird. Bei sehr schnellen, horizontalen Bewegungen und somit hoher Frequenz der auf ein Bauwerk einwirkenden Schwingungen und Stöße, wirken die zur Zentrierung vorgesehenen Federelemente als quasistarre Körper und verhindern in der Loslagerstelle eine Aufnahme der horizontalen Bewegungen. Ferner ist die Lösung mit Federn für Gebiete mit starken Erdbeben nicht geeignet, da die maximal mögliche Auslenkung durch die Federn sehr begrenzt ist. Auch die JP H10 316351 A offenbart ein Auflager, das Auslenkungen ermöglicht.

Die Aufgabe der vorliegenden Erfindung besteht darin, ein Auflager zu schaffen, das auch schnelle horizontale Bewegungen im Bereich des Auflagers zu entkoppeln vermag. Diese Aufgabe wird durch ein Auflager zur bauseitigen Lagerung der beiden Enden einer Personentransporteinrichtung mit den Merkmalen des Anspruchs 1 gelöst. Dieses Auflager weist eine am ersten Ende der Personentransporteinrichtung vorgesehene Schwenklagerstelle auf, deren Schwenkachse bezüglich ihrer Einbaulage vertikal angeordnet ist. Des Weiteren weist das Auflager eine am zweiten Ende der Personentransporteinrichtung vorgesehene Loslagerstelle zur Aufnahme orthogonal zur Schwenkachse auftretender, horizontaler Bewegungen auf. Um die horizontalen Bewegungen unabhängig von deren Geschwindigkeit aufnehmen zu können, weist die Loslagerstelle mindestens einen Wälzkörper auf. Durch diesen mindestens einen Wälzkörper kann eine in der Loslagerstelle durch horizontal auftretende Bewegungen verursachte Gleitreibung in Wälzreibung oder Rollreibung überführt werden.

Bei sehr langsamen und daher niederfrequenten Schwingungen folgt das zweite Ende der Personentransporteinrichtung im Wesentlichen den Bewegungen der angrenzenden Etage nach. Ab einer Grenzgeschwindigkeit, die im Wesentlichen vom Reibungskoeffizienten und der Auflagerlast der Loslagerstelle und der Massenträgheit der Personentransporteinrichtung abhängig ist, werden die horizontalen Bewegungen teilweise in der Loslagerstelle aufgenommen, indem sich das zweite Ende der Personentransporteinrichtung relativ zur angrenzenden Etage verschiebt. Wenn diese Schwingungen kleine Amplituden aufweisen, wird die Struktur der Personentransporteinrichtung, insbesondere deren Tragwerk nur im elastischen Bereich beansprucht, so dass an diesem keine plastischen Deformationen auftreten. Wenn diese Schwingungen aber große Amplituden aufweisen, wird nach kurzer Gleitstrecke durch den mindestens einen Wälzkörper der Reibungswiderstand in der Loslagerstelle drastisch reduziert, so dass die infolge des Reibungswiderstandes auf das zweite Ende wirkende Querkraft nahezu eliminiert und das Tragwerk entlastet wird.

Die vorliegende Erfindung verhindert ferner, dass das zweite Ende in neutraler Betriebslage seitlich pendelt, da die Haftreibung der Loslagerstelle nicht durch das Betreten der Benutzer überwunden werden kann. Zudem ist der mindestens eine Wälzkörper in der neutralen Betriebslage der Personentransporteinrichtung lastfrei und wird daher im Laufe der Zeit nicht durch eine hohe statische Last plastisch deformiert.

Damit möglichst definierte Gleitreibungseigenschaften vorhanden sind, weist die Loslagerstelle mindestens ein Gleitlager auf. Zu den beiden, parallel zur Längserstreckung der Fahrtreppe oder des Fahrsteiges sich erstreckenden Seitenkanten des mindestens einen Gleitlagers sind Wälzkörper angeordnet. Dadurch kann die bei horizontalen Bewegungen auftretende Gleitreibung in beiden Bewegungsrichtungen in Wälzreibung oder Rollreibung überführt werden.

Das mindestens eine Gleitlager weist ein oberes Gleitstück und ein unteres Gleitstück auf. Das obere und das untere Gleitstück weisen je eine Gleitfläche auf, die einander zugewandt sind. Die Gleitflächen können geeignete Oberflächenstrukturen aufweisen, die einen gewünschten Gleitreibungskoeffizienten des Gleitlagers ergeben. Durch die Loslagerstelle können auch Längsdehnungen der Personentransporteinrichtung aufgenommen werden. Die Loslagerstelle kann bei ausreichend breit ausgelegtem Gleitlager aber auch Verschiebungen der beiden Etagen relativ zueinander aufnehmen, die in Richtung der Längserstreckung der Personentransporteinrichtung erfolgen.

Um die Überführung der Gleitreibung in Wälzreibung oder Rollreibung zu erleichtern, ist an jeder gegen einen Wälzkörper gerichteten Seitenkante des oberen Gleitstücks eine Auflauframpe ausgebildet. Diese Auflauframpe dient dem Auflaufen des oberen Gleitstücks auf den Wälzkörper. Beim Auflaufen kann das obere Gleitstück vom unteren Gleitstück zumindest teilweise abheben und rollt dann auf dem mindestens einen Wälzkörper weiter.

Um dem Wälzkörper eine geeignete Laufbahn bereitzustellen, kann die Loslagerstelle einen bauseitig verankerbaren Auflagerträger aufweisen. Das Vorhandensein eines Auflagerträgers ermöglicht, das untere Gleitstück mit dem Auflagerträger zu verbinden. Das obere Gleitstück ist mit dem zweiten Ende der Personentransporteinrichtung auf geeignete Art verbunden. Ferner kann zwischen dem oberen Gleitstück und dem zweiten Ende eine Nivelliereinrichtung angeordnet sein. Diese Nivelliereinrichtung dient der verzugsfreien und bündigen Ausrichtung des zweiten Endes zum Etagenboden. Als Nivelliereinrichtung können beispielsweise Stellschrauben, Distanzbleche, Distanzscheiben, Distanzhülsen und dergleichen mehr verwendet werden.

Der mindestens eine Wälzkörper kann seitlich der Auflauframpe angeordnet, mittels eines mechanisch lösbaren Klebstoffs mit dem Auflagerträger verbunden sein. Dadurch verharrt der Wälzkörper in seiner Position innerhalb der Loslagerstelle, bis durch eine horizontale Bewegung das obere Gleitstück den Wälzkörper beim Auflaufen losbricht. Selbstverständlich kann an Stelle eines Klebstoffs auch temperaturstabiles Schmierfett, Montagefett oder Haftfett verwendet werden.

Der Auflagerträger kann auch mindestens einen Endanschlag zur Begrenzung der Rollstrecke des mindestens einen Wälzkörpers aufweisen. Dies hat den Vorteil, dass sich der mindestens eine Wälzkörper immer in einem begrenzten Bereich befindet und zur Verfügung steht.

Damit sich durch den Betrieb der Personentransporteinrichtung auftretende Vibrationen nicht auf das Gebäude übertragen können, weist das untere Gleitstück vorzugsweise ein Dämpfungselement beziehungsweise eine Schallisolation auf.

Wie bereits weiter oben erläutert, kann die Personentransporteinrichtung als Fahrtreppe oder als Fahrsteig ausgebildet sein. Personentransporteinrichtungen können nicht nur ab Werk mit dem erfindungsgemäßen Auflager versehen sein. Auch bestehende Personentransporteinrichtungen können mit dem erfindungsgemäßen Auflager nachgerüstet werden. Eine solche Modernisierung umfasst die Schritte:
- dass die beiden Enden der bestehenden Personentransporteinrichtung miteinander oder nacheinander angehoben werden,
- dass die beiden Enden der bestehenden Personentransporteinrichtung sowie deren bauseitigen Auflagerstellen zur Aufnahme eines erfindungsgemäßen Auflagers vorbereitet werden,
- dass zwischen dem ersten Ende der Personentransporteinrichtung und dessen bauseitiger Auflagerstelle die Schwenklagerstelle des Auflagers angeordnet wird und
- dass zwischen dem zweiten Ende der Personentransporteinrichtung und dessen bauseitiger Auflagerstelle die Loslagerstelle des Auflagers angeordnet wird.

Das Auflager zur bauseitigen Lagerung der beiden Enden einer Personentransporteinrichtung wird im Folgenden anhand von Beispielen und mit Bezugnahme auf die Zeichnungen näher erläutert. Darin zeigen:
- Figur 1:: in schematischer Darstellung eine Personentransporteinrichtung in der Seitenansicht;
- Figur 2:: in schematischer Darstellung die Personentransporteinrichtung gemäß Figur 1 in der Draufsicht;
- Figur 3:: eine größere Ansicht des in der Figur 1 bezeichneten Details B, darstellend eine an einem ersten Ende der Personentransporteinrichtung angeordnete Schwenklagerstelle des Auflagers;
- Figur 4:: einen Schnitt durch die in der Figur 3 dargestellte Schwenklagerstelle entlang der Linie D-D;
- Figur 5:: einen größer dargestellten Schnitt des in der Figur 1 bezeichneten Details A, darstellend eine an einem zweiten Ende der Personentransporteinrichtung angeordnete Loslagerstelle des Auflagers;
- Figur 6:: eine Frontansicht der in der Figur 5 dargestellten Loslagerstelle in ihrer neutralen beziehungsweise ausgerichteten Betriebslage;
- Figur 7:: eine größere Ansicht des in der Figur 6 bezeichneten Details C und
- Figur 8:: die in der Figur 6 dargestellte Loslagerstelle in ihrer, durch aufgetretene horizontale Bewegungen verursachten ausgelenkten Lage.

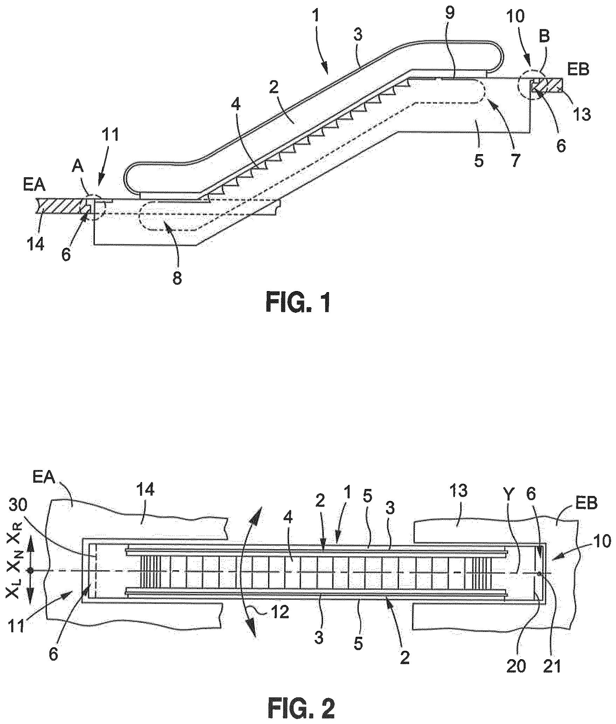

In der Figur 1 ist schematisch eine Personentransporteinrichtung 1 in der Seitenansicht dargestellt. Figur 2 zeigt in schematischer Darstellung die Personentransporteinrichtung 1 gemäß Figur 1 in der Draufsicht. Nachfolgend werden die beiden Figuren 1 und 2 gemeinsam beschrieben.

Die Personentransporteinrichtung 1 kann sowohl eine Fahrtreppe als auch ein Fahrsteig sein. Sie verbindet eine erste Etage EA mit einer zweiten Etage EB. Die Personentransporteinrichtung 1 weist ein Tragwerk 5 beziehungsweise Fachwerk 5 mit zwei Umlenkbereichen 7, 8 auf, zwischen denen ein nur andeutungsweise dargestelltes Stufenband 4 oder Palettenband 4 umlaufend geführt ist. Ein Handlauf 3 ist an einer Balustrade 2 angeordnet. Die Balustrade 2 ist an ihrem unteren Ende mittels eines Balustradensockels 9 mit dem Tragwerk 5 verbunden.

Die Personentransporteinrichtung 1 beziehungsweise deren Tragwerk 5 weist ein erstes Ende 10 und ein zweites Ende 11 auf, die mittels eines Auflagers 6 in bauseitigen Auflagestellen 13, 14 der ersten Etage EA und der zweiten Etage EB gelagert sind. Das Auflager 6 weist eine am ersten Ende 10 angeordnete Schwenklagerstelle 20 und eine am zweiten Ende 11 angeordnete Loslagerstelle 30 auf. Die Schwenklagerstelle 20 weist eine Schwenkachse 21 auf, die bezüglich ihrer Einbaulage vertikal angeordnet ist. Die Loslagerstelle 30 kann orthogonal zur Schwenkachse 21 auftretende, horizontale Bewegungen 12 aufnehmen.

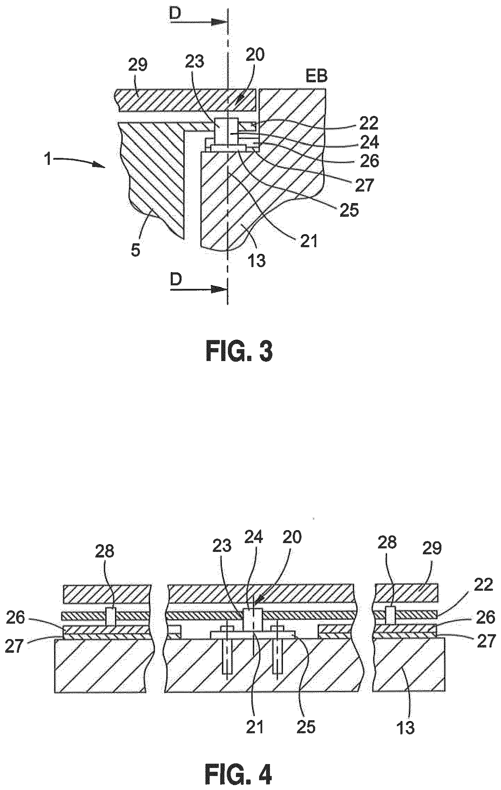

In den Figuren 3 und 4 sind die wichtigsten Bauteile der nachfolgend beschriebenen Schwenklagerstelle 20 dargestellt, wobei Figur 3 eine größere Ansicht des in der Figur 1 bezeichneten Details B zeigt. Die Figur 4 zeigt einen Schnitt durch die in der Figur 3 dargestellte Schwenklagerstelle 20 entlang der Linie D-D.

Ein am Tragwerk 5 angeordneter Auflagerträger 22 ist mit einer in der Mittellängsachse Y (siehe Figur 2) der Personentransporteinrichtung 1 angeordneten Bohrung 23 versehen. In diese Bohrung 23 ragt ein für die Personentransporteinrichtung 1 als Schwenkpunkt beziehungsweise Schwenkachse 21 dienender Bolzen 24, der mittels einer Befestigungsplatte 25 mit der bauseitigen Auflagerstelle 13 fest verbunden ist. Die Schwenklagerstelle 20 umfasst ferner zwischen der bauseitigen Auflagerstelle 13 und dem Auflagerträger 22 angeordnete Auflagerpakete 26, 27, die im vorliegenden Ausführungsbeispiel jeweils eine Stützplatte 26 und ein Dämpfungselement 27 umfassen. Das Dämpfungselement 27 kann beispielsweise eine Kunststoffeinlage, ein Schwingmetallpaket und dergleichen mehr sein. Zwischen der Stützplatte 26 und dem Auflagerträger 22 ist mindestens eine Nivelliereinrichtung 28 angeordnet, die, wie im vorliegenden Ausführungsbeispiel dargestellt, eine Einstellschraube 28 sein kann. Die Schwenklagerstelle 20 wird von einer andeutungsweise dargestellten Bodenabdeckung 29 überspannt.

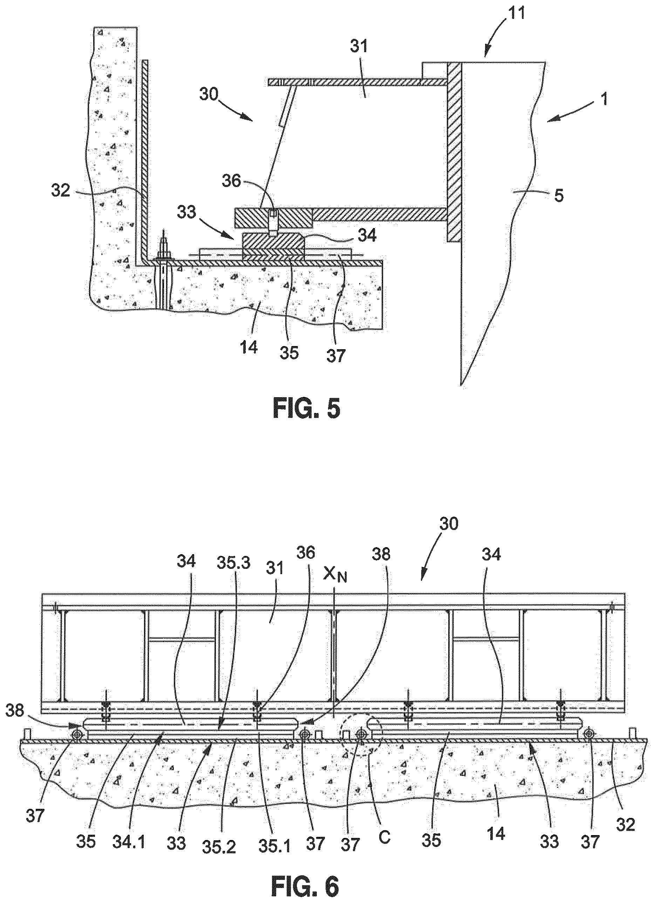

Figur 5 zeigt einen größer dargestellten, in der Figur 2 mit Detail A bezeichneten Ausschnitt der Loslagerstelle 30. Die Figur 6 zeigt eine Frontansicht der in der Figur 5 dargestellten Loslagerstelle 30 in ihrer neutralen beziehungsweise ausgerichteten Betriebslage X_{N} innerhalb der bauseitigen Auflagerstelle 14. Auch diese beiden Figuren werden nachfolgend gemeinsam beschrieben. Wie bereits weiter oben beschrieben, ist die Loslagerstelle 30 am zweiten Ende 11 der Personentransporteinrichtung 1 angeordnet. Hier fällt auf, dass die Loslagerstelle 30 einen außerordentlich steif ausgebildeten Kastenträger 31 aufweist, welcher am zweiten Ende 11 der Personentransporteinrichtung 1 mit deren Tragwerk 5 fest verbunden ist. Die Loslagerstelle 30 weist ferner einen Auflagerträger 32 auf, der fest mit der bauseitigen Auflagerstelle 14 verbunden ist und die Basis für zwei Gleitlager 33 bildet. Die beiden Gleitlager 33 weisen jeweils ein oberes Gleitstück 34 und ein unteres Gleitstück 35 auf, wobei das untere Gleitstück 35 eine Gleitplatte 35.1 und ein Dämpfungselement 35.2 beinhaltet. Das Dämpfungselement 35.2 kann beispielsweise eine Kunststoffeinlage, ein Schwingmetallpaket und dergleichen mehr sein. In der neutralen Betriebslage X_{N} liegt das obere Gleitstück 34 mit seiner oberen Gleitfläche 34.1 auf der unteren Gleitfläche 35.3 des unteren Gleitstücks 35 auf. Die Gleitflächen 34.1, 35.3 können geeignete Oberflächenstrukturen aufweisen, die einen gewünschten Gleitreibungskoeffizienten des Gleitlagers ergeben.

Da auch das zweite Ende 11 der Personentransporteinrichtung 1 zur bauseitigen Auflagerstelle 14 ausgerichtet werden muss, sind zwischen dem oberen Gleitstück 34 und dem steifen Kastenträger 31 ebenfalls Nivelliereinrichtungen 36 vorgesehen.

Zu beiden Seiten der Gleitlager 33 sind Wälzkörper 37 lose auf dem Auflagerträger 32 angeordnet. Die Wälzkörper 37 des dargestellten Ausführungsbeispiels sind hohlzylinderförmig ausgebildet. Deren Mittellängsachsen erstrecken sich wie aus der Figur 5 ersichtlich, parallel zur Mittellängsachse Y (siehe Figur 2) der Personentransporteinrichtung 1 und damit auch parallel zu den in der Längserstreckung der Fahrtreppe 1 oder des Fahrsteiges 1 sich erstreckenden Seitenkanten 38 des mindestens einen Gleitlagers 33.

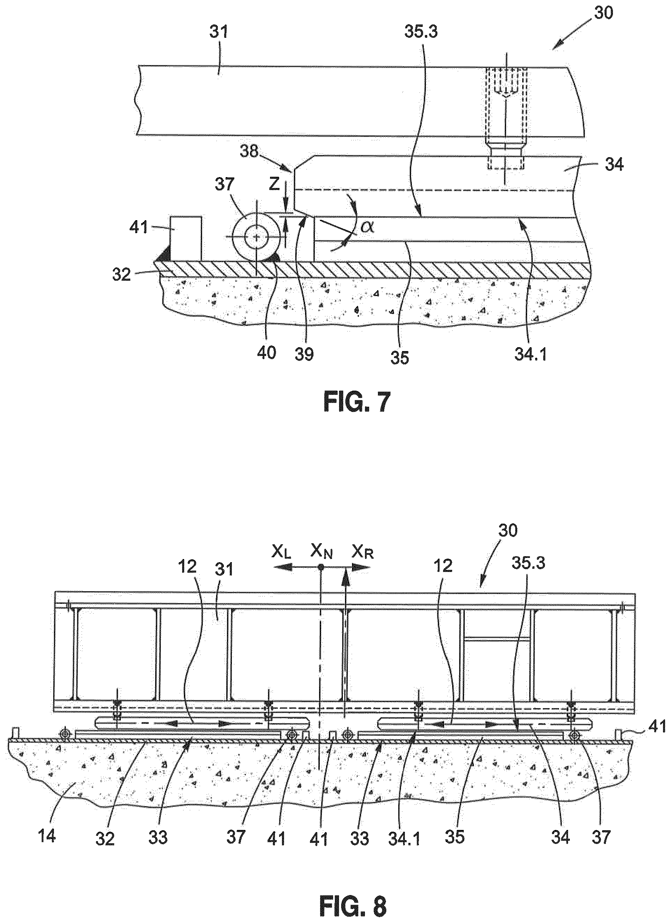

Die Figur 7 zeigt eine größere Ansicht des in der Figur 6 bezeichneten Details C. Der Durchmesser des Wälzkörpers 37 ist, wie aus der Figur 7 ersichtlich, etwas grösser als die Dicke des unteren Gleitstücks 35. Diese als Überhöhung Z bezeichnete Differenz ermöglicht ein zumindest teilweises Anheben beziehungsweise Abheben der oberen Gleitfläche 34.1 von der unteren Gleitfläche 35.3, wenn das obere Gleitstück 34 auf den Wälzkörper 37 aufläuft. Damit ein sicheres Auflaufen gewährleistet ist, sollte die Überhöhung Z nicht zu groß sein und kann 0.1mm bis 3.0mm, vorzugsweise 0.4mm bis 2mm, besonders bevorzugt 0.5mm bis 1mm betragen. Hieraus wird auch verständlich, weshalb der Kastenträger 31 besonders steif ausgebildet sein muss. Wäre dieser hochelastisch, könnte kein Abheben der oberen Gleitfläche 34.1 von der unteren Gleitfläche 35.3 erfolgen, da er sich der überhöhten Kontur des Wälzkörpers 37 anschmiegen würde. Um das Auflaufen zu erleichtern, ist an jeder gegen einen Wälzkörper 37 gerichteten und zum Wälzkörper 37 parallelen Seitenkante 38 des oberen Gleitstücks 34 eine Auflauframpe 39 ausgebildet. Die Auflauframpe 39 sollte nicht zu steil sein und einen Rampenwinkel α zwischen 5° und 30° aufweisen.

Damit der Wälzkörper 37 bis zum Auftreten von horizontalen Bewegungen eine definierte Position innerhalb der Loslagerstelle 30 behält, kann dieser mittels eines mechanisch lösbaren Klebstoffs 40, eines temperaturstabilen Schmierfetts, eines Montagefetts oder eines Haftfetts mit dem Auflageträger verbunden sein. Dadurch wird verhindert, dass der Wälzkörper 37 nicht schon bei geringsten Vibrationen innerhalb der Loslagerstelle 30 herumrollt. Als Klebstoff 40 kann beispielsweise lufthärtende Silikonkautschukmasse verwendet werden. Sobald das obere Gleitstück 34 infolge auftretender horizontaler Bewegungen den Wälzkörper 37 erreicht, wird dieser vom Auflageträger 32 losgebrochen und kann dann ungehindert rollen. Um dessen Rollstrecke zu begrenzen, kann am Auflagerträger 32 für jeden Wälzkörper 37 mindestens ein Endanschlag 41 vorgesehen sein.

Die Funktion der Loslagerstelle 30 ist auch aus der Figur 8 ersichtlich. Diese zeigt die in der Figur 6 dargestellte Loslagerstelle 30 in einer, durch aufgetretene horizontale Bewegungen 12 verursachten, ausgelenkten Lage X_{R}. Der Verlauf der horizontalen Bewegungen 12 des oberen Gleitstücks 34 relativ zum unteren Gleitstück 35 von der neutralen Betriebslage X_{N} in die ausgelenkten Lagen X_{R}, X_{L} ist nachfolgend beschrieben.

Wenn schnelle horizontale Bewegungen 12 auftreten, durch welche die Haftreibung zwischen den Gleitflächen 34.1, 35.3 der Gleitlager 33 überwunden wird, erfolgt eine Relativverschiebung zwischen dem oberen Gleitstück 34 und dem unteren Gleitstück 35. Dabei tritt Gleitreibung auf, bis das obere Gleitstück 34 auf einen Wälzkörper 37aufläuft. Die auflaufende Seite des oberen Gleitstücks 34 wird angehoben und dabei innerhalb der Loslagerstelle 30 die Gleitreibung in Wälzreibung (Gleitreibung und Rollreibung) überführt. Je nach Rollstrecke des oberen Gleitstücks 34 auf dem Wälzkörper 37, kann auch eine vollständige Trennung der beiden Gleitflächen 34.1, 35.3 des Gleitlagers 33 erfolgen, wodurch eine nahezu reine Rollreibung in der Loslagerstelle 30 vorherrscht. Da sich Naturereignisse wie Erdbeben üblicherweise nicht durch einzelne Stöße, sondern durch Schwingungen mit stark abklingenden Amplituden ausweisen, kann die Bewegungsrichtung der horizontalen Bewegung 12 des Kastenträgers 31 relativ zum Auflagerträger 32 in die Gegenrichtung ändern, bevor die Wälzkörper 37 die zugeordneten Endanschläge 41 erreichen. Bei der anschließenden Bewegung 12 in der Gegenrichtung herrscht zuerst Rollreibung und Wälzreibung in der Loslagerstelle 30 vor, bis das obere Gleitstück 34 den Wälzkörper 37 verlässt und über das untere Gleitstück 35 gleitet. Zur andern Seite hin wiederholt sich dann der vorangehend beschriebene Bewegungsverlauf.

Nach einem Ereignis beziehungsweise Erdbeben muss die in Figur 2 dargestellte Personentransporteinrichtung 1 überprüft, gegebenenfalls zerlegt und gewartet werden. Dabei kann auch die Loslagerstelle 30 überprüft und das zweite Ende 11 der Personentransporteinrichtung 1 gegebenenfalls von einer ausgelenkten Lage X_{R} oder X_{L} in die neutrale Betriebslage X_{N} gebracht und ausgerichtet werden. Durch die Überführung der Gleitreibung in Wälzreibung beziehungsweise Rollreibung wird eine Biegebeanspruchung am Tragwerk 5 ausreichend reduziert, so dass sich die Etagen EA, EB relativ zueinander verschieben können, während sich infolge der Massenträgheit die Personentransporteinrichtung 1 selbst nur geringfügig bewegt.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem anstelle der Wälzkörper 37 am Auflagerträger 32 drehgelagerte Rollen, Kugeln, Kugelführungen oder dergleichen mehr angeordnet sind. Ferner können die Auflauframpen 39 auch am unteren Gleitstück 35 und die drehgelagerten Rollen am Kastenträger 31 angeordnet sein. Selbstverständlich sind anstelle von zylinderrohrförmigen Wälzkörpern 37 auch vollzylindrische Wälzkörper ohne Bohrung einsetzbar. Der Auflagerträger 32 kann ferner leicht gegen die Gleitlager 33 geneigte Rollbahnen für die Wälzkörper 37 aufweisen, so dass sich das zweite Ende 11 der Personentransporteinrichtung 1 nach einem Ereignis infolge der Schwerkraft zumindest teilweisewieder selbst in die neutrale Betriebslage X_{N} ausrichtet.

## Patentansprüche

1. Auflager (6) zur bauseitigen Lagerung der beiden Enden (10, 11) einer Personentransporteinrichtung (1), aufweisend eine am ersten Ende (10) der Personentransporteinrichtung (1) vorgesehene Schwenklagerstelle (20), deren Schwenkachse (21) bezüglich ihrer Einbaulage vertikal angeordnet ist und eine am zweiten Ende (11) der Personentransporteinrichtung (1) vorgesehene Loslagerstelle (30) zur Aufnahme orthogonal zur Schwenkachse (21) auftretender, horizontaler Bewegungen (12), wobei die Loslagerstelle (30) mindestens einen Wälzkörper (37) aufweist, durch welchen Wälzkörper (37) eine in der Loslagerstelle (30) durch horizontal auftretende Bewegungen (12) verursachte Gleitreibung in Wälzreibung oder Rollreibung überführbar ist, wobei die Loslagerstelle (30) mindestens ein Gleitlager (33) aufweist und zu den beiden, parallel zur Längserstreckung (Y) der Personentransporteinrichtung (1) sich erstreckenden Seitenkanten (38) des mindestens einen Gleitlagers (33) Wälzkörper (37) angeordnet sind, und wobei das mindestens eine Gleitlager (33) ein oberes Gleitstück (34) und ein unteres Gleitstück (35) aufweist, **dadurch gekennzeichnet, dass** an jeder, gegen einen Wälzkörper (37) gerichteten Seitenkante (38) des oberen Gleitstücks (34) eine Auflauframpe (39) ausgebildet ist, welche Auflauframpe (39) dem Auflaufen des oberen Gleitstücks (34) auf den Wälzkörper (37) dient, so dass nach einer seitlichen, horizontalen Bewegung (12) des zweiten Endes (11), das obere Gleitstück (34) vom unteren Gleitstück (35) zumindest teilweise abgehoben ist.

2. Auflager (6) nach Anspruch 1, wobei die Loslagerstelle (30) einen bauseitig verankerbaren Auflagerträger (32) aufweist.

3. Auflager (6) nach Anspruch 2, wobei das obere Gleitstück (34) mit dem zweiten Ende (11) verbunden ist und das untere Gleitstück (35) mit dem Auflagerträger (32) verbunden ist.

4. Auflager (6) nach Anspruch 2 oder 3, wobei der mindestens eine Wälzkörper (37) mittels eines mechanisch lösbaren Klebstoffs (40), eines temperaturstabilen Schmierfetts, eines Montagefetts oder eines Haftfetts seitlich der Auflauframpe (39) angeordnet, mit dem Auflagerträger (32) verbunden ist.

5. Auflager (6) nach einem der Ansprüche 2 bis 4, wobei der Auflagerträger (32) mindestens einen Endanschlag (41) zur Begrenzung der Rollstrecke des mindestens einen Wälzkörpers (37) aufweist.

6. Auflager (6) nach einem der Ansprüche 2 bis 5, wobei das untere Gleitstück (35) ein Dämpfungselement (35.2) aufweist.

7. Personentransporteinrichtung (1) die als Fahrtreppe oder als Fahrsteig ausgebildet ist, mit einem Auflager (6) nach einem der Ansprüche 1 bis 6.

8. Verfahren zur Modernisierung einer bestehenden Personentransporteinrichtung (1), aufweisend die Schritte,
• dass die beiden Enden (10, 11) der bestehenden Personentransporteinrichtung (1) angehoben werden,
• dass die beiden Enden (10, 11) der bestehenden Personentransporteinrichtung (1) sowie deren bauseitigen Auflagerstellen (13, 14) zur Aufnahme eines Auflagers (6) nach einem der Ansprüche 1 bis 6 vorbereitet werden,
• dass zwischen dem ersten Ende (10) der Personentransporteinrichtung (1) und dessen bauseitiger Auflagerstelle (13) die Schwenklagerstelle (20) des Auflagers (6) angeordnet wird und dass zwischen dem zweiten Ende (11) der Personentransporteinrichtung (1) und dessen bauseitiger Auflagerstelle (14) die Loslagerstelle (30) des Auflagers (6) angeordnet wird.

## Claims

1. Support (6) for on-site mounting of the two ends (10, 11) of a passenger transport device (1), having a pivot bearing point (20) provided at the first end (10) of the passenger transport device (1), the pivot axis (21) of which is arranged vertically with respect to its installation position, and a floating bearing point (30) provided at the second end (11) of the passenger transport device (1) for accommodating horizontal movements (12) occurring orthogonally to the pivot axis (21), the floating bearing point (30) having at least one rolling element (37), by means of which rolling element (37) a sliding friction caused in the floating bearing point (30) by horizontally occurring movements (12) can be converted into rolling friction, the floating bearing point (30) having at least one sliding bearing (33) and rolling elements (37) being arranged on the two side edges (38) of the at least one sliding bearing (33) which extend parallel to the longitudinal extension (Y) of the passenger transport device (1), and the at least one slide bearing (33) having an upper slide (34) and a lower slide (35), **characterized in that** a run-on ramp (39) is formed on each side edge (38) of the upper slide (34) directed towards a rolling element (37), which run-on ramp (39) is used to run the upper slide (34) on the rolling element (37), so that after a lateral, horizontal movement (12) of the second end (11), the upper slide (34) is at least partially lifted from the lower slide (35).

2. Support (6) according to claim 1, wherein the floating bearing point (30) has a support beam (32) which can be anchored on-site.

3. Support (6) according to claim 2, wherein the upper slide (34) is connected to the second end (11) and the lower slide (35) is connected to the support beam (32).

4. Support (6) according to either claim 2 or claim 3, wherein the at least one rolling element (37) is arranged on the side of the run-on ramp (39), connected to the support beam (32) by means of a mechanically releasable adhesive (40), a temperature-stable lubricating grease, an assembly grease or an adhesive grease.

5. Support (6) according to any of claims 2 to 4, the support beam (32) having at least one end stop (41) for limiting the rolling path of the at least one rolling element (37).

6. Support (6) according to any of claims 2 to 5, the lower slide (35) having a damping element (35.2).

7. Passenger transport device (1) which is configured as an escalator or a moving walkway, having a support (6) according to any of claims 1 to 6.

8. Method for modernizing an existing passenger transport device (1), comprising the steps
• whereby the two ends (10, 11) of the existing passenger transport device (1) are raised,
• whereby the two ends (10, 11) of the existing passenger transport device (1) and the on-site support points (13, 14) thereof are prepared for receiving a support (6) according to any of claims 1 to 6,
• whereby the pivot bearing point (20) of the support (6) is arranged between the first end (10) of the passenger transport device (1) and the on-site support point (13) thereof and whereby the floating bearing point (30) of the support (6) is arranged between the second end (11) of the passenger transport device (1) and the on-site support point (14) thereof.

## Revendications

1. Dispositif d'appui (6) destiné au montage sur des deux extrémités (10, 11) d'un dispositif de transport des personnes (1), comportant un point de palier de pivotement (20) situé au niveau de la première extrémité (10) du dispositif de transport des personnes (1), dont l'axe de pivotement (21) est disposé verticalement par rapport à sa position d'installation, et un point de palier libre (30) situé au niveau de la seconde extrémité (11) du dispositif de transport des personnes (1) et permettant de recevoir des mouvements horizontaux (12) se produisant orthogonalement par rapport à l'axe de pivotement (21), dans lequel le point de palier libre (30) comporte au moins un corps de roulement (37), au moyen dudit corps de roulement (37) un friction de glissement provoqué au niveau du point de palier libre (30) par des mouvements horizontaux (12) peut être transformé, en friction de roulement, dans lequel le point de palier libre (30) comporte au moins un palier lisse (33) et des corps de roulement (37) sont disposés sur les deux bords latéraux (38) de l'au moins un palier lisse (33) s'étendant parallèlement par rapport à l'extension longitudinale (Y) du dispositif de transport des personnes (1), et dans lequel l'au moins un palier lisse (33) comporte une glissière supérieure (34) et une glissière inférieure (35), **caractérisé en ce qu'**une rampe de déplacement (39) est conçue sur chaque bord latéral (38) de la glissière supérieure (34) orienté vers un corps de roulement (37), ladite rampe de déplacement (39) servant à déplacer la glissière supérieure (34) sur le corps de roulement (37) de telle sorte qu'après un mouvement latéral et horizontal (12) de la seconde extrémité (11), la glissière supérieure (34) est au moins partiellement soulevée de la glissière inférieure (35).

2. Dispositif d'appui (6) selon la revendication 1, dans lequel le point de palier libre (30) comporte une poutre de support (32), laquelle peut être ancrée sur un chantier.

3. Dispositif d'appui (6) selon la revendication 2, dans lequel la glissière supérieure (34) est reliée à la seconde extrémité (11) et la glissière inférieure (35) est reliée à la poutre de support (32).

4. Dispositif d'appui (6) selon la revendication 2 ou 3, dans lequel l'au moins un corps de roulement (37) est disposé sur le côté de la rampe de déplacement (39) au moyen d'un adhésif (40) amovible mécaniquement, d'une graisse lubrifiante stable en température, d'une graisse de montage ou d'une graisse adhésive et est relié à la poutre de support (32).

5. Dispositif d'appui (6) selon l'une quelconque des revendications 2 à 4, dans lequel la poutre de support (32) comporte au moins une butée d'extrémité (41) destinée à la limitation de la course de roulement de l'au moins un corps de roulement (37).

6. Dispositif d'appui (6) selon l'une quelconque des revendications 2 à 5, dans lequel la glissière inférieure (35) comporte un élément d'amortissement (35.2).

7. Dispositif de transport des personnes (1), lequel est conçu sous forme d'escalier roulant ou de trottoir roulant, comportant un dispositif d'appui (6) selon l'une quelconque des revendications 1 à 6.

8. Procédé de modernisation d'un dispositif de transport des personnes (1) existant, comportant les étapes suivantes :
• le relevement des deux extrémités (10, 11) du dispositif de transport des personnes (1) existant,
• la préparation des deux extrémités (10, 11) du dispositif de transport des personnes (1) existant ainsi que de leurs points d'appui (13, 14) sur un chantier pour recevoir un dispositif d'appui (6) selon l'une quelconque des revendications 1 à 6,
• la disposition du point de palier de pivotement (20) du dispositif d'appui (6) entre la première extrémité (10) du dispositif de transport des personnes (1) et son point d'appui (13) sur un chantier et la disposition du point de palier libre (30) du dispositif d'appui (6) entre la seconde extrémité (11) du dispositif de transport des personnes (1) et son point d'appui (14) sur un chantier.
